# FASCICULE DE BREVET EUROPEEN

(11) **EP 1 583 688 B1**
(45) Date de publication et mention de la délivrance du brevet: **16.01.2008**
(21) Numéro de dépôt: 04701971.6
(22) Date de dépôt: 14.01.2004
(51) Int. Cl.: B62M 25/04

(54) **SELECTEUR DE VITESSES A DEVELOPPEMENTS PREDETERMINES, NOTAMMENT POUR CYCLES**
GANGSCHALTUNG MIT VORBESTIMMTEN GÄNGEN, INSBESONDERE FÜR FAHRRÄDER
SPEED CHANGER WITH PRE-DETERMINED GEARS, PARTICULARLY FOR CYCLES

(30) Priorité: 15.01.2003 FR 0300372
(43) Date de publication de la demande: 12.10.2005
(73) Titulaire: ETCETERA, 44400 Reze (FR)
(72) Inventeur: ROLLAND, Norbert, F-44700 Orvault (FR)
(74) Mandataire: Laget, Jean-Loup
(86) Numéro de dépôt international: PCT/FR2004/000057
(87) Numéro de publication internationale: WO 2004/069639

(56) Documents cités:
- EP-A- 0 727 348
- WO-A-98/36960
- FR-A- 2 750 669

## Description

La présente invention concerne un sélecteur de vitesses à développements prédéterminés, notamment pour cycle, pour la commande par câbles, à partir d'une poignée tournante unique, de dérailleurs respectivement associés à un moyen de rappel élastique, tel qu'un ressort, ledit sélecteur comportant, logés à l'intérieur d'un boîtier, au moins deux mécanismes de manoeuvre de câble, l'un de manoeuvre du câble du dérailleur avant ou dérailleur de plateaux, l'autre de manoeuvre du câble du dérailleur arrière ou dérailleur de pignons, ce second mécanisme, solidaire en rotation de la poignée, étant apte à provoquer, lors d'une rotation de la poignée dans un même sens, un lâcher ou un tirage du câble arrière.

La plupart des vélos sont aujourd'hui équipés de plusieurs plateaux, généralement au nombre de trois, et de plusieurs pignons, généralement compris entre 7 et 10. Les plateaux, ou respectivement les pignons, présentent un diamètre et par conséquent un nombre de dents différent d'un plateau ou respectivement d'un pignon à un autre pour permettre le choix de développements en fonction du couple plateau-pignon. Le plus grand développement qui demande le plus grand effort correspond au plus grand plateau et au plus petit pignon tandis que le plus petit développement qui demande le moindre effort correspond au plus petit plateau et au plus grand pignon. Entre ces deux développements extrêmes, l'utilisateur peut faire varier à volonté les développements.

Toutefois, il est apparu très rapidement que l'utilisateur non habitué à cette pluralité de développements pouvait parfois sélectionner des développements incompatibles avec une durée de vie importante de la mécanique. Ces développements sont notamment ceux qui engendrent un désalignement important de la chaîne tels que grand plateau/grand pignon. Par ailleurs, pour passer d'un développement à un autre sans fatigue, il est préférable de choisir une succession de développements qui provoque une augmentation ou respectivement une réduction progressive de l'effort de l'utilisateur. Or, l'utilisateur a des difficultés à gérer cette sélection de développements. Il est souvent obligé de regarder le positionnement de sa chaîne sur ses plateaux ou pignons pour opérer cette sélection. En outre, il oublie parfois que de passer d'un pignon de plus petit diamètre à un pignon de plus grand diamètre réduit l'effort à fournir pour une cadence identique de pédalage alors que c'est l'inverse pour les plateaux, ce qui l'amène à une erreur de sélection.

Pour éviter tous les inconvénients précités, des sélecteurs de vitesse ont été conçus.

Une première catégorie de sélecteur de vitesses est notamment décrite dans le brevet FR-A-2.530.573. Ce sélecteur permet de sélectionner un couple plateau/pignon au moyen d'une manette de commande unique. Toutefois, la conception du mécanisme de manoeuvre des dérailleurs, identique pour le dérailleur avant et pour le dérailleur arrière, est constituée d'un treuil d'enroulement d'un câble et ne permet pas, pour un même sens d'actionnement de la manette de commande, de solliciter le dérailleur arrière dans les deux sens de manière à supprimer un développement redondant ou à maintenir un écart sensiblement constant entre deux développements successifs.

Une seconde catégorie de sélecteur ayant pour vocation de supprimer les développements redondants, d'éviter des désalignements de chaîne trop importants et d'imposer une succession de développements correspondant à un chemin de vitesse prédéterminé, est notamment décrite dans les brevets européens EP-A-0.727.348, les demandes internationales WO 95.03208 et WO 91/15393 et la demande de brevet français FR-A-2.750.669.

Ce sélecteur permet donc de déterminer une pluralité de couples pignon/plateau qui se succéderont de manière déterminée en fonction de l'actionnement d'un dispositif de commande situé au guidon. Ce dispositif de commande est généralement situé à, ou au voisinage de, une extrémité d'un guidon et est de préférence constitué d'un organe rotatif tel qu'une poignée tournante bien connue. Ce sélecteur permet d'agir lors d'un changement de développement, soit uniquement sur un pignon, soit uniquement sur un plateau, soit simultanément sur un pignon et un plateau de manière à opérer simultanément un changement de plateau et de pignon pour optimiser les variations d'effort entre deux développements successifs. Dans ces sélecteurs, généralement, le mécanisme de manoeuvre d'un dérailleur avant ou arrière est identique. Ce mécanisme de manoeuvre peut notamment être constitué par des chemins de came ménagés sur une pièce rotative. Ces chemins de came peuvent recevoir les extrémités des câbles de commande des dérailleurs et sont dans ce cas ménagés dans un barillet comme l'illustre le brevet européen EP-A-0.727.348. Dans une variante plus particulièrement illustrée par la demande internationale WO 91/15393, les câbles de commande des dérailleurs sont reliés à des chariots munis d'ergots se logeant dans les chemins de cames d'une pièce cylindrique, la rotation de la pièce cylindrique générant un déplacement des chariots et par suite, une traction ou respectivement un lâcher des câbles de commande. Un principe analogue est retenu dans le brevet américain US-A-4.201.095. Toutes ces solutions à base d'un ou plusieurs chemins de came ont pour inconvénient de générer un encombrement important de l'ensemble. Le sélecteur de vitesse décrit dans le brevet FR-A-2.750.669 comporte quant à lui deux mécanismes de manoeuvre de câble différents. Toutefois, comme dans les documents précités, ces mécanismes de manoeuvre sont sollicités en permanence de manière simultanée. Il en résulte l'obligation ici d'imposer un mouvement de la gaine par rapport à la poignée tournante. Ce mouvement pose un problème d'étanchéité du dispositif. Une solution, telle que celle décrite dans les brevets FR-A-2.758.122 ou FR-A-2.758.123, met en oeuvre des mécanismes d'actionnement des câbles à nouveau identiques et notamment constitués par un tambour d'enroulement de câble de telle sorte qu'un changement simultané d'un plateau et d'un pignon à partir d'un organe de commande unique pour éviter un développement redondant est impossible.

Enfin, il existe également des sélecteurs de vitesse tels que ceux décrits dans la demande internationale WO 98.36960, qui est considéré comme représentant l'état de la technique le plus pertinent, dans lesquels la poignée de commande unique est une poignée apte à être déplacée en rotation et en translation de manière à agir soit sur le plateau seul, soit sur le pignon seul, soit sur l'ensemble. Une telle solution impose à nouveau une gymnastique intellectuelle à l'utilisateur.

Un but de la présente invention est donc de proposer un sélecteur de vitesse d'un nouveau type dont la conception permet de réduire son encombrement, de limiter son usure dans le temps sans toutefois nuire aux performances de ce dernier.

Un autre but de la présente invention est de proposer un sélecteur de vitesse d'un nouveau type dont la conception autorise une amplification de la course de traction du câble ou une minimalisation de la course de lâcher du câble pour autoriser des tolérances de fabrication sans augmenter l'effort de commande et l'encombrement de l'ensemble.

A cet effet, l'invention a pour objet un sélecteur de vitesses à développement prédéterminé, notamment pour cycle, pour la commande par câbles, à partir d'une poignée tournante unique, de dérailleurs respectivement associés à un moyen de rappel élastique, tel qu'un ressort, ledit sélecteur comportant, logés à l'intérieur d'un boîtier, au moins deux mécanismes de manoeuvre de câble, l'un de manoeuvre du câble du dérailleur avant ou dérailleur de plateaux, l'autre de manoeuvre du câble du dérailleur arrière ou dérailleur de pignons, ce second mécanisme, solidaire en rotation de la poignée, étant apte à provoquer, lors d'une rotation de la poignée dans un même sens, un lâcher ou un tirage du câble arrière, caractérisé en ce que l'ensemble rotatif formé au moins du mécanisme de manoeuvre du câble arrière et de la poignée est couplable en rotation de manière intermittente avec le mécanisme de manoeuvre du câble avant du dérailleur de plateaux, ce mécanisme de manoeuvre du câble avant étant, à l'état couplé, apte à provoquer, en fonction du sens de rotation de la poignée, un tirage ou un lâcher du câble avant du dérailleur de plateaux.

Grâce à cette conception du sélecteur de vitesse, il est possible de supprimer toute redondance des développements choisis tout en conservant un alignement optimal de la chaîne. Il est également possible de sélectionner les développements de manière à avoir une variation d'effort sensiblement constante d'un développement à un autre. L'entraînement intermittent de l'un des mécanismes de manoeuvre de câble permet en outre de limiter l'usure de l'ensemble et de réduire l'encombrement de l'ensemble.

Selon une forme de réalisation préférée de l'invention, l'ensemble rotatif formé du mécanisme de manoeuvre du câble arrière et de la poignée est couplable en rotation de manière intermittente avec le mécanisme de manoeuvre du câble avant du dérailleur de plateau par l'intermédiaire d'au moins une pièce solidaire en rotation de la poignée et mobile axialement le long d'un axe parallèle à l'axe de la poignée, lors d'un déplacement en rotation de cette dernière.

L'invention sera bien comprise à la lecture de la description suivante d'exemples de réalisation, en référence aux dessins annexés dans lesquels :
la figure 1 représente une vue partielle éclatée d'un sélecteur de vitesse conforme à l'invention en position ouverte du boîtier ;
la figure 2 représente une vue partielle en perspective d'un sélecteur de vitesse objet de l'invention à l'état enlevé de la poignée et d'une partie du boîtier ;

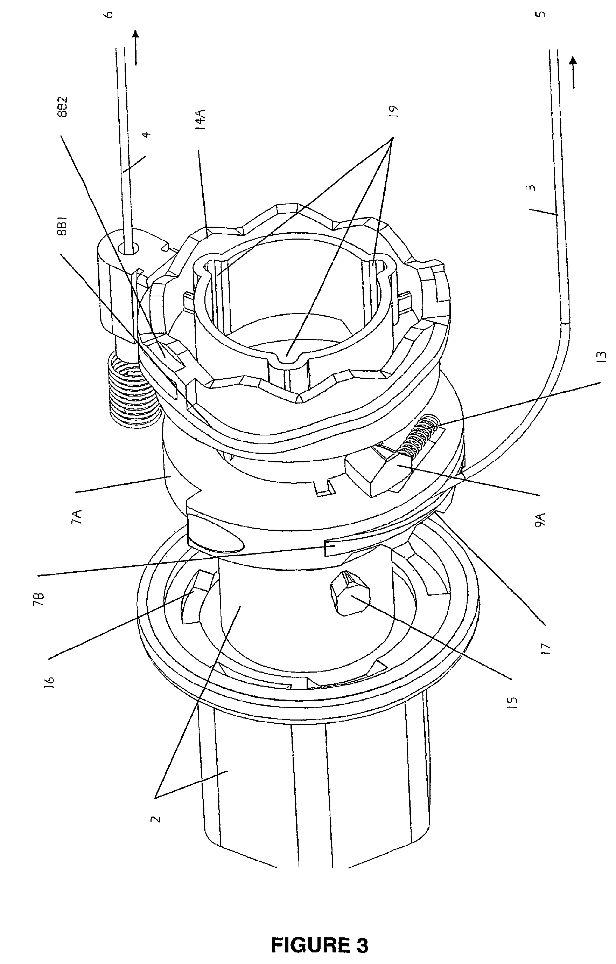

la figure 3 représente une vue partielle en perspective du sélecteur de vitesses objet de l'invention dans lequel la partie du boîtier opposée à celle portant la poignée a été enlevée ;
les figures 4A à 4J représentent des vues schématiques illustrant respectivement, pour les figures 4A à 4E un tirage du câble avant et, pour les figures 4F à 4J un lâcher du câble avant ;

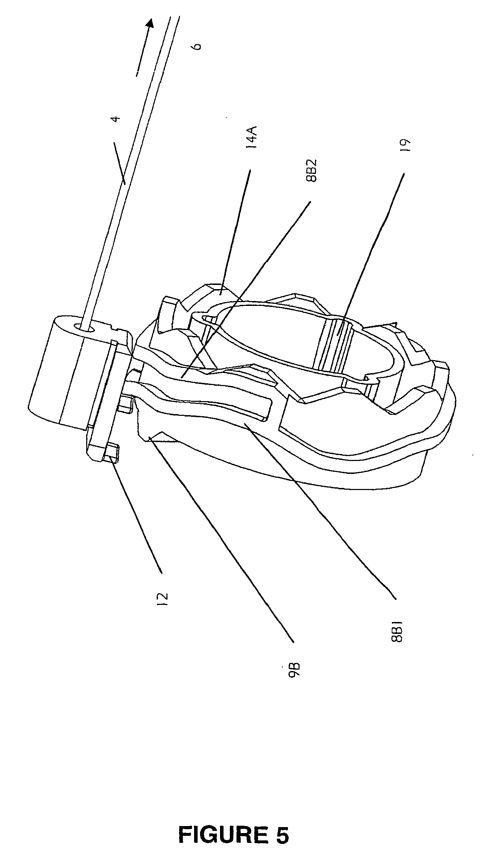

la figure 5 représente une vue partielle schématique du mécanisme de manoeuvre du dérailleur arrière ;
la figure 6 représente une vue partielle schématique en perspective d'un autre mode de réalisation d'un sélecteur de vitesse conforme à l'invention et
la figure 7 représente une vue partielle schématique en perspective d'un autre mode de réalisation d'un sélecteur de vitesse conforme à l'invention.

Le sélecteur 1 de vitesse, objet de l'invention, est plus particulièrement destiné à s'appliquer aux cycles ou vélos. Toutefois, il peut, de manière similaire, s'appliquer à toute transmission comprenant un arbre menant équipé d'au moins deux plateaux et d'un dérailleur et d'un arbre mené équipé d'au moins deux pignons et d'un dérailleur. Ce sélecteur 1 de vitesse est destiné à permettre la commande du dérailleur 5 dit dérailleur de plateaux et/ou du dérailleur 6 arrière dit dérailleur de pignons à partir d'une poignée 2 tournante unique montée au voisinage du guidon du cycle.

Les dérailleurs avant 5 et arrière 6 peuvent être des dérailleurs connus. Ainsi, le dérailleur 5 avant peut être constitué d'une chape mobile suivant un axe sensiblement parallèle à l'axe du pédalier, cette chape ayant pour fonction de guider la chaîne pour son passage d'un plateau à un autre. Le dérailleur 6 arrière est, quant à lui, généralement constitué d'une roulette mobile latéralement qui pousse la chaîne sur son brin détendu pour permettre le passage de la chaîne d'un pignon à un autre.

Ces dérailleurs 5, 6 sont respectivement associés à un moyen de rappel élastique, tel qu'un ressort, destiné à agir sur le câble de commande du dérailleur. Ainsi, dans les exemples représentés, le câble de commande du dérailleur 5 avant à plateaux est représenté en 3 tandis que le câble de commande du dérailleur 6 arrière est représenté en 4. Le mécanisme 8 de manoeuvre du câble 4 arrière est constitué d'un tambour 8A solidaire en rotation de la poignée 2. Cette solidarisation en rotation peut être obtenue par l'intermédiaire de cannelures ménagées respectivement sur l'axe de la poignée 2 et dans l'alésage du tambour 8A. Ainsi, ce tambour 8A est libre en translation par rapport à la poignée 2. Ce tambour 8A comprend, sur sa périphérie externe, au moins une piste 8B1, 8B2 de guidage d'une tête 11 de câble 4. La tête 11 de câble 4 se déplace en translation suivant un axe sensiblement parallèle à l'axe de rotation de la poignée 2 lors de son suivi du profil de la piste 8B1, 8B2 obtenu par rotation de la poignée 2. Ce déplacement de la tête 11 de câble provoque, en fonction de sa direction, un lâcher ou un tirage du câble 4 arrière du dérailleur 6 arrière.

Dans les exemples représentés, la tête 11 de câble 4 est constituée de deux ergots 12 aptes à coopérer alternativement avec un segment de la piste 8B1, 8B2 du tambour 8A, cette piste étant constituée de deux segments décalés axialement. Cette tête 11 de câble 4 est pourvue d'un ressort 13 rappelant au moins une partie de la tête 11 en contact permanent avec la piste 8B1, 8B2. Le déplacement en translation de la tête 11 de câble est guidé par l'intermédiaire d'une glissière (non représentée) réalisée dans le boîtier 18 logeant les mécanismes 7 et 8 de manoeuvre des câbles. Il est à noter que le ressort 13 joue un rôle essentiel à l'état non monté du sélecteur de vitesse. En effet, à l'état monté du sélecteur de vitesse, la tête 11 de câble est rappelée en contact permanent avec l'un des segments de la piste par l'intermédiaire du ressort équipant le dérailleur arrière. Le fait de disposer de deux segments 8B1, 8B2 de piste qui agissent de manière non simultanée permet un meilleur compactage du tambour 8A et une diminution de l'encombrement de ce tambour. Le déplacement axial de la tête 11 de câble, provoqué par une rotation de la poignée, génère un tirage du câble 4 ou respectivement un lâcher du câble 4, en fonction du profil de piste suivi de manière à autoriser, par l'intermédiaire du dérailleur 6 arrière soit par passage à un pignon de plus petit diamètre, soit de plus grand diamètre pour un même sens de rotation de la poignée 2, un changement de pignon. Le tambour 8A est équipé de moyens d'immobilisation en une pluralité de positions angulaires prédéterminées correspondant chacune à un positionnement du dérailleur 6 arrière sur un pignon. Dans l'exemple représenté, ces moyens d'immobilisation sont constitués de crans 14A et de dents 14B, à profil de préférence triangulaire tronqué, portés respectivement par une face frontale du tambour 8A et une partie stationnaire en regard du boîtier 18. Ces moyens d'immobilisation autorisent en outre un déplacement axial du tambour 8A dans le sens d'un tirage de câble 4 lors d'un entraînement en rotation de ce dernier par l'intermédiaire de la poignée 2. Ce tambour 8A est par ailleurs rappelé dans une direction opposée par des moyens de rappel appropriés. Ce mouvement linéaire axial du tambour 8A permet d'obtenir une amplification du mouvement du câble 4 appelée "over shifting". En effet, dans le cas d'une traction ou d'un tirage de câble, si la course de câble nécessaire à un changement par exemple d'un pignon ou d'un plateau est de 3 mm, le câble exécutera une course de 4 mm avant d'être relâché. Le ressort du dérailleur permettra alors de repositionner le mécanisme de manoeuvre dans une position angulaire prédéterminée. A l'inverse, dans le cas d'un lâcher de câble, on fait exécuter au câble une course de 2 mm pour obtenir une course au final de 3 mm. Ce phénomène est appelé "under shifting". A nouveau, c'est l'action du moyen de rappel ou ressort du dérailleur qui permet d'obtenir cette course finale de 3 mm. Ces amplifications ou minimalisations de mouvement sont nécessaires pour rattraper tous les jeux de fonctionnement et l'imprécision des assemblages. On constate en effet, par exemple au cours du temps, un allongement du câble du fait de son usure.

Ainsi, en résumé, en ce qui concerne le fonctionnement du dérailleur 6 arrière de plateau, l'entraînement en rotation de la poignée 2 génère dans un premier temps un déplacement axial du tambour 8A par coopération des crans 14A et des dents 14B, puis, lors de l'entraînement en rotation du tambour 8A par la poignée 2, un déplacement axial de la tête 11 de câble 4, ce déplacement axial provoquant un lâcher ou un tirage du câble 4 arrière en fonction du profil de la piste suivi par la tête 11 de câble. Cette action sur le câble 4 permet, par l'intermédiaire du dérailleur 6, un changement de pignon. On constate que, du fait de la conception de ce mécanisme de manoeuvre, pour un même sens d'entraînement en rotation de la poignée, il peut être provoqué un lâcher ou un tirage du câble 4 en fonction du profil de la piste.

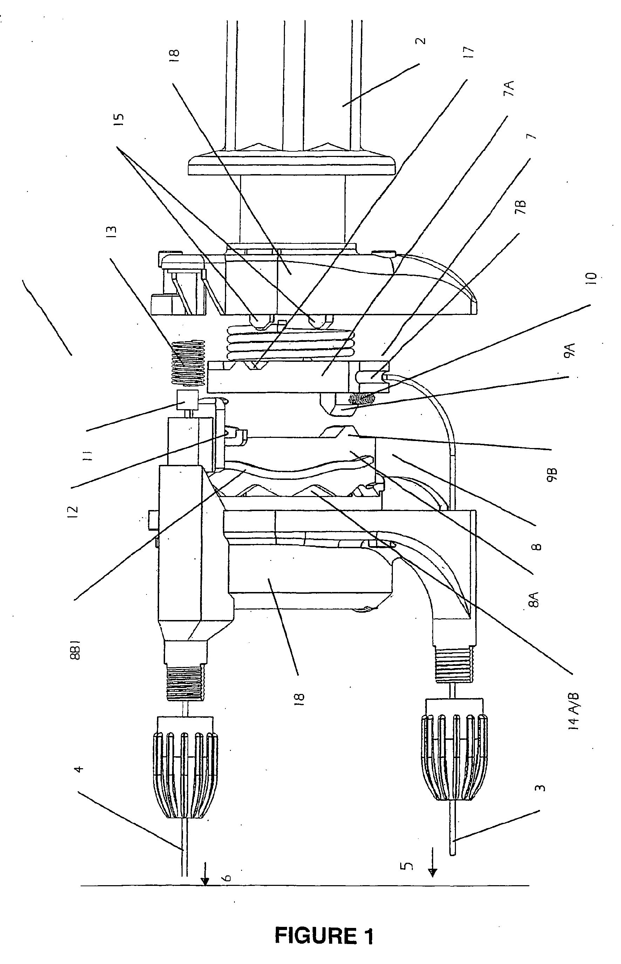

Cet ensemble rotatif, formé du mécanisme 8 de manoeuvre du câble 4 arrière et de la poignée 2, est couplable en rotation de manière intermittente avec le mécanisme 7 de manoeuvre du câble 3 avant du dérailleur 5 de plateaux. Ce mécanisme 7 de manoeuvre du câble 3 avant est, à l'état couplé, apte à provoquer, en fonction du sens de rotation de la poignée 2, un tirage ou un lâcher du câble 3 avant du dérailleur 5 d'un plateau. Ainsi, Ce mécanisme 7 de manoeuvre du câble 3 peut provoquer un changement de plateau parallèlement à un changement de pignon obtenu au moyen du mécanisme 8 de manoeuvre du câble 4. Ce couplage intermittent en rotation de l'ensemble mécanisme 8 de manoeuvre du câble 4 arrière/poignée 2 avec le mécanisme 7 de manoeuvre du câble 3 avant du dérailleur 5 avant peut être obtenu par au moins un déplacement axial du mécanisme 8 de manoeuvre du câble 4 arrière, le long d'un axe sensiblement parallèle à l'axe de rotation de la poignée 2, lors d'une rotation de cette dernière. Ainsi, le déplacement axial, tel que mentionné ci-dessus, est obtenu par l'action des crans 14A et des dents 14B et permet d'une part une amplification de mouvement du câble arrière, d'autre part un déplacement axial du tambour 8A pour permettre un éventuel couplage avec le mécanisme 7 de manoeuvre du câble 3 avant. Dans les exemples représentés, l'ensemble formé du mécanisme 8 de manoeuvre du câble 4 arrière et de la poignée 2 est couplable en rotation de manière intermittente avec le mécanisme 7 de manoeuvre du câble 3 avant du dérailleur 5 avant par crabotage après déplacement axial du mécanisme 8 de manoeuvre du câble 4 arrière en direction du mécanisme 7 de manoeuvre du câble avant. Le crabot 9A, 9B s'étend entre les mécanismes 7, 8 de manoeuvre de câble 3, 4, comme le montre la figure 1, dans laquelle la face frontale du tambour 8 est équipée de dents de crabot 9B tandis que la face frontale d'un treuil 7A qui sera décrit ci-après et qui sert à l'enroulement du câble 3 avant comporte sur sa face frontale en regard de celle du tambour des dents 9A.

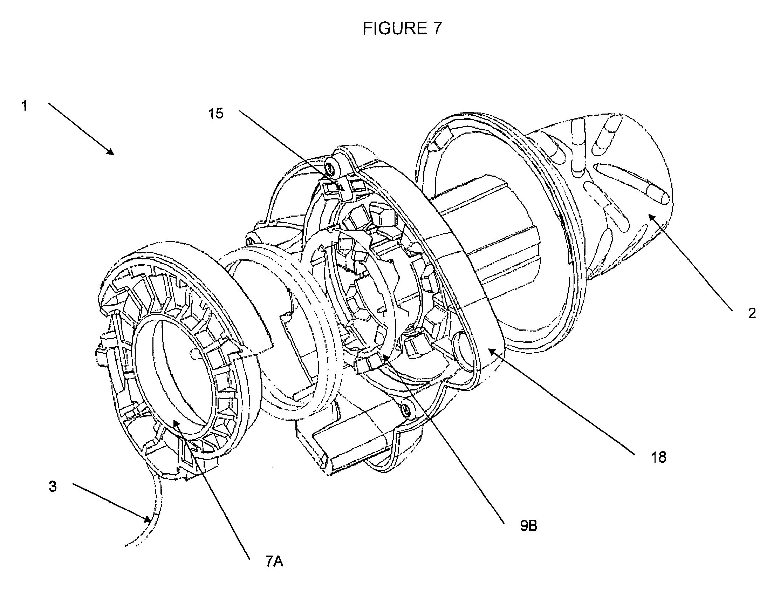

Dans un autre mode de réalisation de l'invention, représenté à la figure 7, les dents 9B du crabot sont portées par une bague solidaire en rotation de la poignée 2 et déplaçable axialement lors d'une rotation de la poignée à l'aide d'ergots positionnés sur ladite poignée. Ce déplacement axial de la bague, solidaire en rotation de la poignée 2 et portant les dents 9B du crabot, permet la coopération des dents 9B du crabot avec des dents 9A portées par la face frontale du treuil 7A qui sera décrit ci-après et qui sert à l'enroulement du câble 3 avant. Dans ce cas, à nouveau, le crabotage est obtenu par déplacement axial d'une pièce mobile le long d'un axe parallèle à l'axe de rotation de la poignée lors d'un déplacement en rotation de cette dernière, cette solution se distinguant de la solution précédente par le fait que seule ici la pièce portant une partie de dents de crabot est déplaçable axialement et non plus la totalité du mécanisme de commande de manoeuvre du câble 4 arrière lors de l'entraînement en rotation de la poignée.

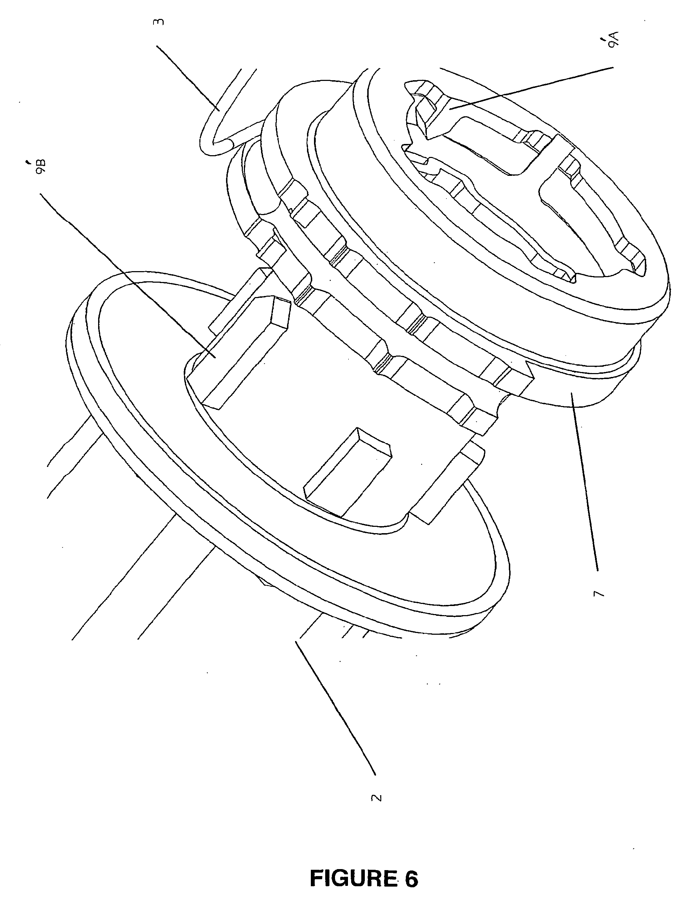

Dans encore un autre mode de réalisation représenté à la figure 6, le crabot 9'A, 9'B s'étend entre le mécanisme 7 de manoeuvre du câble avant et un flasque solidaire en rotation de la poignée 2. Dans ce cas, le tambour 8A provoque, au cours de son déplacement axial, un entraînement axial du treuil 7A venant en prise par son crabot avec le flasque solidaire en rotation de la poignée 2. On constate ainsi, comme le montre la figure 1, que les moyens d'immobilisation en une position angulaire quelconque du tambour 8A ou de l'ensemble du mécanisme 8 de manoeuvre du câble arrière commandent en outre les déplacements axiaux de ce mécanisme pour permettre ensuite un couplage par crabotage du mécanisme de manoeuvre 8 avec le mécanisme de manoeuvre 7. Pour permettre en outre un rattrapage des jeux de fonctionnement du type de ceux décrits ci-dessus, les dents 9A, 9B du crabot équipant l'un des mécanismes 7, 8 de manoeuvre sont montées avec un jeu angulaire sur ledit mécanisme. Ainsi, dans l'exemple représenté, la dent 9A est montée avec un jeu angulaire sur la face frontale du treuil 7A et est équipée d'un ressort 10 tendant à rappeler la dent 9B dans une direction opposée à celle résultant de l'effort exercé par le ressort du dérailleur.

Dans les exemples représentés, le mécanisme 7 de manoeuvre du câble 3 avant est de nature différente du mécanisme 8 de manoeuvre du câble 4 arrière dans la mesure où il permet, pour un même sens de rotation de la poignée 2, uniquement un lâcher ou un tirage du câble 3 avant. Ce mécanisme 7 de manoeuvre du câble 3 avant est constitué d'un treuil 7A muni d'une gorge 7B d'enroulement du câble 3 avant. Ce treuil 7A présente une pluralité de positions angulaires prédéterminées correspondant chacune à une position du dérailleur 5 avant sur un plateau. Ce treuil 7A est rappelé dans l'une quelconque des positions angulaires par action du ressort associé au dérailleur 5 avant. Ce treuil 7A est immobilisé dans une position angulaire quelconque par l'intermédiaire de butées 15 s'étendant entre deux pistes 16, 17 annulaires en regard à profil différencié ménagées respectivement l'une, représentée en 17, sur une face frontale du treuil 7A, l'autre, représentée en 16, sur une pièce solidaire en rotation de la poignée 2. Ces butées 15, mobiles axialement suivant un axe parallèle à l'axe de rotation de la poignée 2, sont, en fonction du profil des pistes aptes à s'escamoter à l'intérieur d'un creux de la pièce solidaire en rotation de la poignée pour autoriser une libre rotation du treuil 7A ou à être maintenues en position en saillie de ladite pièce pour venir se loger dans un creux du treuil 7A de manière à empêcher la rotation du treuil dans une direction correspondant à celle obtenue sous l'effet du ressort associé au dérailleur 5 avant.

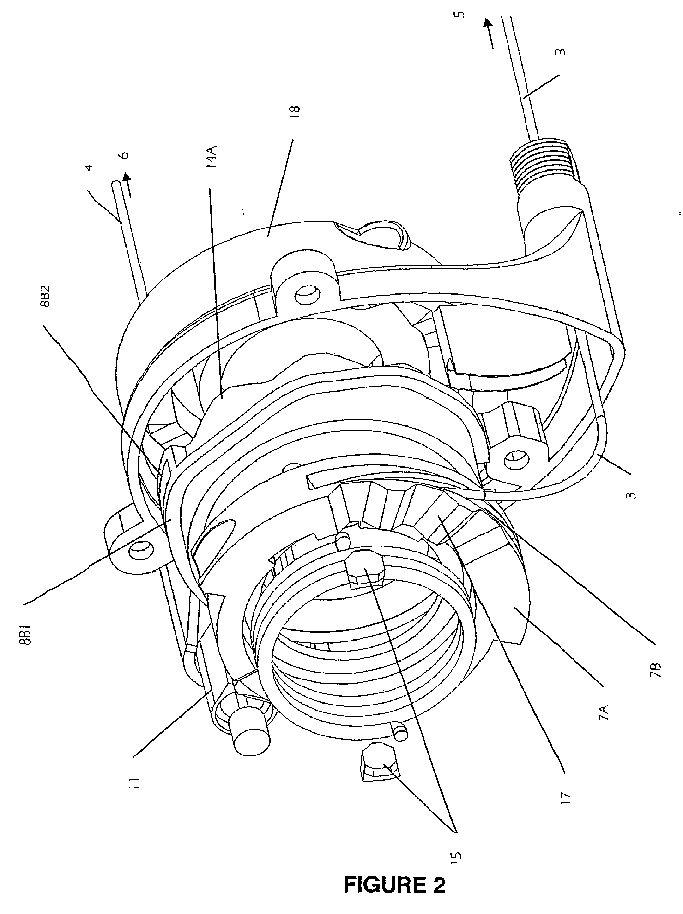

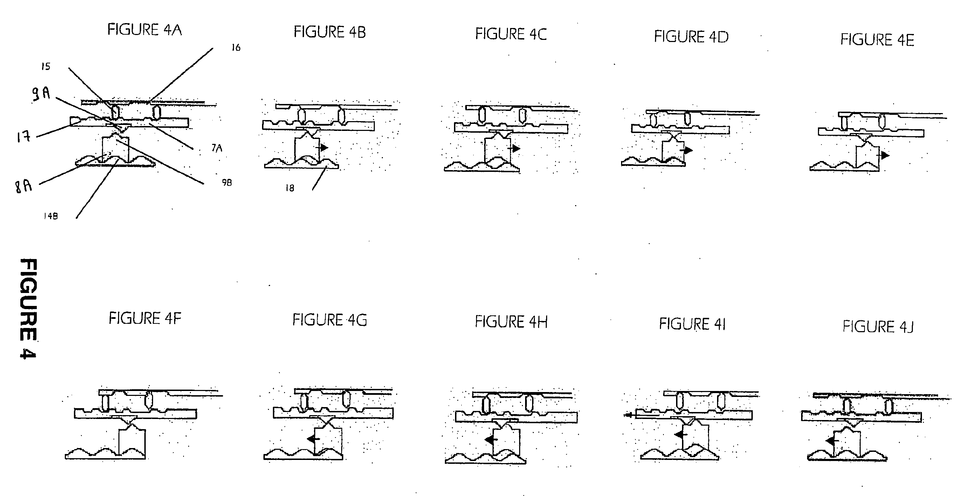

Ainsi, lorsque l'on veut passer d'un plateau N à un plateau N + 1, les déplacements sont conformes à ceux représentés dans la figure 4A à la figure 4E. La poignée 2 est bien évidemment entraînée en rotation. Cette poignée 2 est généralement pourvue sur son axe de cannelures destinées à coopérer avec le tambour 8A du mécanisme 8 de manoeuvre du dérailleur du câble 4 arrière du dérailleur 6 arrière pour entraîner en rotation le tambour 8A du mécanisme de manoeuvre. Au cours de son déplacement, le tambour 8A vient par l'intermédiaire de ses dents 9B de crabot coopérer avec les dents 9A portées par le treuil 7A du mécanisme 7 de manoeuvre du dérailleur 5 de plateaux. Cet accouplement est possible grâce au déplacement axial du tambour 8, déplacement axial provoqué par coopération de crans 14A et des dents 14B décrits ci-dessus. La poursuite du déplacement en rotation de la poignée 2 (vers la droite dans les figures 4A à 4E) génère l'entraînement en rotation dans un même sens, c'est-à-dire vers la droite du câble 3 avant dans le sens d'un tirage du câble du dérailleur 5 avant, action qui s'exerce à l'encontre du ressort de rappel qui équipe ce dérailleur. Ainsi, dans un premier temps, le tambour 8A est déplacé axialement de la figure 1 à la figure 2 par rotation de la poignée 2. Ce mouvement axial du tambour place les dents 9B du tambour 8A en contact avec les dents 9A du treuil 7A de manière à permettre un entraînement en rotation du treuil 7A.

A la figure 4C, le treuil 7A est alors entraîné en rotation par l'intermédiaire du tambour 8A lors de la poursuite du déplacement en rotation de la poignée 2. Les butées 15 mobiles sont placées dans des crans de la piste 16 autorisant un tel déplacement en rotation.

A la figure 4D, le tambour 8A tend à se déplacer axialement dans une direction opposée pour s'immobiliser angulairement du fait de la coopération des dents 14A du tambour 8A avec les crans 14B portés par une pièce fixe du boîtier 18. Le treuil 7A n'est alors plus entraîné en rotation. Il est soumis à l'action du ressort de rappel associé au dérailleur avant. C'est à ce moment que les butées 15 entrent en action pour immobiliser ce treuil 7 notamment par coopération de ces butées 15 avec les pistes 16 et 17. En effet, au moins l'une des butées 15 est immobilisée axialement en translation et vient se loger à l'intérieur d'un cran de la piste 17 de telle sorte que le déplacement du treuil 7A vers la gauche à la figure 4E est empêché. Pour obtenir un lâcher du câble 3 avant et permettre le passage d'un plateau N + 1 à un plateau N, ces déplacements sont conformes à ceux représentés dans les figures 4F à 4J. Le tambour 8A est tout d'abord entraîné en rotation par la poignée 2 et déplacé vers la gauche dans la figure 4F. Au cours de son entraînement en rotation, il se déplace axialement du fait de ses moyens d'immobilisation angulaires et vient au contact des dents de crabot portées par le treuil 7A d'enroulement du câble 3 avant. Il agit alors sur la dent 9A de crabot et provoque simplement un déplacement de la dent 9A chargée par ressort comme l'illustre la figure 4H.

Une fois cette dent 9A en butée, la poursuite du déplacement du tambour 8A provoque alors un entraînement en rotation du treuil 7A jusqu'à une position dans laquelle il est à nouveau immobilisé en rotation par l'intermédiaire d'une butée mobile 15, le tambour 8A est lui-même immobilisé par coopération des dents 14A et des crans 14B.

La figure 4H illustre le phénomène d'under shifting. En effet, à cette figure, on note que le lâcher de câble qui sera obtenu sera réduit par rapport au mouvement relatif entre tambour et treuil. Ainsi, cette disposition des butées 15 facilite les amplifications ou minimalisations des mouvements de câbles souhaités lors d'un tirage du câble ou d'un lâcher de câble.

## Revendications

1. Sélecteur (1) de vitesses à développements prédéterminés, notamment pour cycle, pour la commande par câbles (3, 4), à partir d'une poignée (2) tournante unique, de dérailleurs (5, 6) respectivement associés à un moyen de rappel élastique, tel qu'un ressort, ledit sélecteur (1) comportant, logés à l'intérieur d'un boîtier (18), au moins deux mécanismes (7, 8) de manoeuvre de câble, l'un (7) de manoeuvre du câble (3) du dérailleur (5) avant ou dérailleur de plateaux, l'autre (8) de manoeuvre du câble (4) du dérailleur (6) arrière ou dérailleur de pignons, ce second mécanisme (8), solidaire en rotation de la poignée (2), étant apte à provoquer, lors d'une rotation de la poignée (2) dans un même sens, un lâcher ou un tirage du câble (4) arrière,
**caractérisé en ce que** l'ensemble rotatif formé au moins du mécanisme (8) de manoeuvre du câble (4) arrière et de la poignée (2) est couplable en rotation de manière intermittente avec le mécanisme (7) de manoeuvre du câble (3) avant du dérailleur (5) de plateaux, ce mécanisme (7) de manoeuvre du câble (3) avant étant, à l'état couplé, apte à provoquer, en fonction du sens de rotation de la poignée (2), un tirage ou un lâcher du câble (3) avant du dérailleur (5) de plateaux.

2. Sélecteur (1) de vitesse selon la revendication 1,
**caractérisé en ce que** l'ensemble rotatif formé du mécanisme (8) de manoeuvre du câble (4) arrière et de la poignée (2) est couplable en rotation de manière intermittente avec le mécanisme (7) de manoeuvre du câble (3) avant du dérailleur (5) de plateau par l'intermédiaire d'au moins une pièce solidaire en rotation de la poignée et mobile axialement le long d'un axe parallèle à l'axe de la poignée (2), lors d'un déplacement en rotation de cette dernière.

3. Sélecteur (1) de vitesse selon l'une des revendications 1 et 2,
**caractérisé en ce que** le couplage intermittent en rotation de l'ensemble mécanisme (8) de manoeuvre du câble (4) arrière/poignée (2) avec le mécanisme (7) de manoeuvre du câble (3) avant du dérailleur (5) avant est obtenu par au moins un déplacement axial du mécanisme (8) de manoeuvre du câble (4) arrière, le long d'un axe sensiblement parallèle à l'axe de rotation de la poignée (2), lors d'une rotation de cette dernière.

4. Sélecteur (1) de vitesse selon l'une des revendications 1 et 2,
**caractérisé en ce que** l'ensemble formé du mécanisme (8) de manoeuvre du câble (4) arrière et de la poignée (2) est couplable en rotation de manière intermittente avec le mécanisme (7) de manoeuvre du câble (3) avant du dérailleur (5) avant par crabotage.

5. Sélecteur (1) de vitesse selon la revendication 4,
**caractérisé en ce que** le crabot (9A, 9B) s'étend entre les mécanismes (7, 8) de manoeuvre de câble (3, 4), les dents (9A, 9B) du crabot équipant l'un des mécanismes (7, 8) de manoeuvre pouvant être montées avec un jeu angulaire sur ledit mécanisme de manière à autoriser un rattrapage des jeux de fonctionnement.

6. Sélecteur (1) de vitesse selon l'une des revendications 1 à 5,
**caractérisé en ce que** le mécanisme de manoeuvre du câble (4) arrière est constitué d'un tambour (8A) solidaire en rotation de la poignée (2), ce tambour (8A) comprenant, sur sa périphérie externe, au moins une piste (8B1, 8B2) de guidage d'une tête (11) de câble (4), ladite tête (11) de câble (4) se déplaçant en translation suivant un axe sensiblement parallèle à l'axe de rotation de la poignée (2) lors de son suivi du profil de la piste (8B1, 8B2) obtenu par rotation de la poignée (2), ce déplacement provoquant, en fonction de sa direction, un lâcher ou un tirage du câble (4) arrière.

7. Sélecteur (1) de vitesse selon la revendication 6,
**caractérisé en ce que** la tête (11) de câble (4) est constituée de deux ergots (12) aptes à coopérer alternativement avec un segment de la piste (8B1, 8B2) du tambour (8A) constituée de deux segments décalés axialement.

8. Sélecteur (1) de vitesse selon l'une des revendications 6 et 7,
**caractérisé en ce que** la tête (11) de câble (4) est pourvue d'un ressort (13) rappelant au moins une partie de la tête (11) en contact permanent avec la piste (8B1, 8B2).

9. Sélecteur (1) de vitesse selon l'une des revendications 6 à 8,
**caractérisé en ce que** le tambour (8A) est équipé de moyens d'immobilisation en une pluralité de positions angulaires prédéterminées correspondant chacune à un positionnement du dérailleur (6) arrière sur un pignon, ces moyens d'immobilisation autorisant en outre un déplacement axial du tambour (8A) dans le sens d'un tirage de câble (4) lors d'un entraînement en rotation de ce dernier par l'intermédiaire de la poignée (2), ledit tambour (8A) étant rappelé dans une direction opposée par des moyens de rappel appropriés.

10. Sélecteur (1) de vitesse selon la revendication 9,
**caractérisé en ce que** les moyens d'immobilisation sont constitués de crans (14A) et de dents (14B), à profil de préférence triangulaire tronqué, portés respectivement par une face frontale du tambour (8A) et une partie stationnaire en regard du boîtier (18).

11. Sélecteur (1) de vitesse selon l'une des revendications 1 à 10,
**caractérisé en ce que** le mécanisme (7) de manoeuvre du câble (3) avant est constitué d'un treuil (7A) muni d'une gorge (7B) d'enroulement du câble (3) avant, ce treuil (7A) présentant une pluralité de positions angulaires prédéterminées correspondant chacune à une position du dérailleur (5) avant sur un plateau, ce treuil (7A) étant rappelé dans l'une quelconque des positions angulaires par action du ressort associé au dérailleur (5) avant.

12. Sélecteur (1) de vitesse selon la revendication 11,
**caractérisé en ce que** le treuil (7A) est immobilisé dans une position angulaire quelconque par l'intermédiaire de butées (15) s'étendant entre deux pistes (16, 17) annulaires en regard à profil différencié ménagées respectivement l'une (17) sur une face frontale du treuil (7A), l'autre (16) sur une pièce solidaire en rotation de la poignée (2), lesdites butées (15), mobiles axialement suivant un axe parallèle à l'axe de rotation de la poignée (2), étant, en fonction du profil des pistes aptes à s'escamoter à l'intérieur d'un creux de la pièce solidaire en rotation de la poignée pour autoriser une libre rotation du treuil (7A) ou à être maintenues en position en saillie de ladite pièce pour venir se loger dans un creux du treuil (7A) de manière à empêcher la rotation du treuil dans une direction correspondant à celle obtenue sous l'effet du ressort associé au dérailleur (5) avant.

## Claims

1. Speed changer (1) with pre-determined gears, particularly for cycles, for the control by cables (3, 4), from a single rotating grip (2), of derailleurs (5, 6) respectively associated with an elastic return means, such as a spring, said changer (1) comprising at least two cable operating mechanisms (7, 8) housed within a casing (18), one mechanism (7) for operating the cable (3) of the front derailleur (5) or chainwheel derailleur, the other mechanism (8) for operating the cable (4) of the rear derailleur (6) or sprocket derailleur, said second mechanism (8) fixed in rotation to the grip (2) being capable of effecting a release or pulling of the rear cable (4), when the grip (2) is rotated in the same direction,
**characterised in that** the rotary assembly, formed at least by the mechanism (8) for operating the rear cable (4) and the grip (2), may be rotationally coupled intermittently to the mechanism (7) for operating the front cable (3) of the chainwheel derailleur (5), said mechanism (7) for operating the front cable (3) being capable, in the coupled state, of effecting a pulling or a release of the front cable (3) of the chainwheel derailleur (5), depending on the direction of rotation of the grip (2).

2. Speed changer (1) according to Claim 1, **characterised in that** the rotary assembly, formed by the mechanism (8) for operating the rear cable (4) and the grip (2), may be rotationally coupled intermittently to the mechanism (7) for operating the front cable (3) of the chainwheel derailleur (5) by means of at least one part fixed in rotation to the grip and axially mobile along an axis parallel to the axis of the grip (2) during a rotational displacement thereof.

3. Speed changer (1) according to one of Claims 1 and 2, **characterised in that** the intermittent rotational coupling of the assembly consisting of the mechanism (8) for operating the rear cable (4)/grip (2) to the mechanism (7) for operating the front cable (3) of the front derailleur (5) is obtained by at least one axial displacement of the mechanism (8) for operating the rear cable (4), along an axis substantially parallel to the axis of rotation of the grip (2) during a rotation thereof.

4. Speed changer (1) according to one of Claims 1 and 2, **characterised in that** the assembly, formed by the mechanism (8) for operating the rear cable (4) and the grip (2), may be rotationally coupled intermittently to the mechanism (7) for operating the front cable (3) of the front derailleur (5) by claw coupling.

5. Speed changer (1) according to Claim 4, **characterised in that** the claw (9A, 9B) extends between the mechanisms (7, 8) for operating the cable (3, 4), the teeth (9A, 9B) of the claw equipping one of the operating mechanisms (7, 8) being able to be mounted with angular play on said mechanism, so as to allow take-up of the operating play.

6. Speed changer (1) according to one of Claims 1 to 5, **characterised in that** the mechanism for operating the rear cable (4) consists of a drum (8A) fixed in rotation to the grip (2), said drum (8A) comprising, on its external periphery, at least one track (8B1, 8B2) for guiding a head (11) of the cable (4), said head (11) of the cable (4) being displaced in translation along an axis substantially parallel to the axis of rotation of the grip (2) as it follows the profile of the track (8B1, 8B2) obtained by rotation of the grip (2), said displacement effecting, according to its direction, a release or a pulling of the rear cable (4).

7. Speed changer (1) according to Claim 6, **characterised in that** the head (11) of the cable (4) consists of two lugs (12) capable of cooperating alternately with a segment of the track (8B1, 8B2) of the drum (8A) formed by two axially offset segments.

8. Speed changer (1) according to one of Claims 6 and 7, **characterised in that** the head (11) of the cable (4) is provided with a spring (13) returning at least one part of the head (11) into permanent contact with the track (8B1, 8B2).

9. Speed changer (1) according to one of Claims 6 to 8, **characterised in that** the drum (8A) is fitted with means for immobilisation in a plurality of predetermined angular positions, each corresponding to a positioning of the rear derailleur (6) on a sprocket, said means for immobilisation allowing, moreover, an axial displacement of the drum (8A) in the direction of pulling the cable (4) when said cable is driven in rotation by means of the grip (2), said drum (8A) being returned in an opposing direction by appropriate return means.

10. Speed changer (1) according to Claim 9, **characterised in that** the means for immobilisation consist of notches (14A) and teeth (14B), with a preferably truncated triangular profile, borne respectively by a front face of the drum (8A) and a part which is stationary relative to the casing (18).

11. Speed changer (1) according to one of Claims 1 to 10, **characterised in that** the mechanism (7) for operating the front cable (3) consists of a winch (7A) provided with a groove (7B) for winding the front cable (3), said winch (7A) having a plurality of predetermined angular positions, each corresponding to a position of the front derailleur (5) on a chainwheel, said winch (7A) being returned into any one of the angular positions by the action of the spring associated with the front derailleur (5).

12. Speed changer (1) according to Claim 11, **characterised in that** the winch (7A) is immobilised in any angular position by means of stops (15) extending between two opposing annular tracks (16, 17) with different profiles, one respective track (17) being arranged on a front face of the winch (7A), the other respective track (16) being arranged on a part fixed in rotation to the grip (2), said stops (15), which are axially mobile along an axis parallel to the axis of rotation of the grip (2) and depending on the profile of the tracks, being capable of being retracted inside a recess of the part fixed in rotation to the grip to allow a free rotation of the winch (7A) or to be held in a position projecting from said part, to be housed in a recess of the winch (7A) so as to prevent the rotation of the winch in a direction corresponding to that obtained under the action of the spring associated with the front derailleur (5).

## Patentansprüche

1. Gangschaltung (1) mit vorbestimmten Übersetzungen, insbesondere für Fahrräder, für die Betätigung von Schaltvorrichtungen (5, 6), die jeweils einem elastischen Rückstellmittel wie einer Feder zugeordnet sind, über Seilzüge (3, 4) an einem einzigen Drehgriff (2), wobei die Schaltung (1) mindestens zwei in einem Gehäuse (18) untergebrachte Seilzugbetätigungsvorrichtungen (7, 8) umfasst, eine Vorrichtung (7) zur Betätigung des Seilzuges (3) der vorderen Schaltvorrichtung (5), auch Umwerfer genannt, die andere Vorrichtung (8) zur Betätigung des Seilzuges (4) der hinteren Schaltvorrichtung (6), auch Schaltwerk genannt, wobei die drehfest mit dem Griff (2) verbundene zweite Vorrichtung (8) fähig ist, bei einer Drehung des Griffes (2) in eine gleiche Richtung ein Loslassen oder Anziehen des hinteren Seilzuges (4) hervorzurufen, **dadurch gekennzeichnet, dass** die drehbare Einheit, die mindestens von der Vorrichtung (8) zur Betätigung des hinteren Seilzuges (4) und dem Griff (2) gebildet wird, intermittierend drehbeweglich mit der Vorrichtung (7) zur Betätigung des vorderen Seilzuges (3) des Umwerfers (5) verbindbar ist, wobei die Vorrichtung (7) zur Betätigung des vorderen Seilzuges (3) im verbundenen Zustand in Abhängigkeit von der Drehrichtung des Griffes (2) fähig ist, ein Anziehen oder Loslassen des vorderen Seilzuges (3) des Umwerfers (5) hervorzurufen.

2. Gangschaltung (1) nach Anspruch 1, **dadurch gekennzeichnet, dass** die drehbare Einheit, die von der Vorrichtung (8) zur Betätigung des hinteren Seilzuges (4) und dem Griff (2) gebildet wird, über mindestens ein drehfest mit dem Griff verbundenes und bei einer Drehung des Griffes (2) entlang einer parallel zur Achse des Griffes (2) verlaufenden Achse axial bewegliches Teil intermittierend drehbeweglich mit der Vorrichtung (7) zur Betätigung des vorderen Seilzuges (3) des Umwerfers (5) verbindbar ist.

3. Gangschaltung (1) nach einem der Ansprüche 1 und 2, **dadurch gekennzeichnet, dass** die sich intermittierend drehende Verbindung der Einheit aus der Vorrichtung (8) zur Betätigung des hinteren Seilzuges (4) und dem Griff (2) mit der Vorrichtung (7) zur Betätigung des vorderen Seilzuges (3) der vorderen Schaltvorrichtung (5) bei einer Drehung des Griffes (2) durch mindestens eine axiale Bewegung der Vorrichtung (8) zur Betätigung des hinteren Seilzuges (4) entlang einer im Wesentlichen parallel zur Drehachse des Griffes (2) verlaufenden Achse erhalten wird.

4. Gangschaltung (1) nach einem der Ansprüche 1 und 2, **dadurch gekennzeichnet, dass** die Einheit, die von der Vorrichtung (8) zur Betätigung des hinteren Seilzuges (4) und dem Griff (2) gebildet wird, formschlüssig intermittierend drehbeweglich mit der Vorrichtung (7) zur Betätigung des vorderen Seilzuges (3) der vorderen Schaltvorrichtung (5) verbindbar ist.

5. Gangschaltung (1) nach Anspruch 4, **dadurch gekennzeichnet, dass** sich die Klauenkupplung (9A, 9B) zwischen den Vorrichtungen (7, 8) zur Betätigung der Seilzüge (3, 4) erstreckt, wobei die Klauen (9A, 9B) der Klauenkupplung, mit der eine der Betätigungsvorrichtungen (7, 8) ausgerüstet ist, mit einem Winkelspiel an der Vorrichtung befestigt werden kann, um einen Ausgleich der Betriebsspiele zu ermöglichen.

6. Gangschaltung (1) nach einem der Ansprüche 1 bis 5, **dadurch gekennzeichnet, dass** die Vorrichtung zur Betätigung des hinteren Seilzuges (4) eine drehfest mit dem Griff (2) verbundene Trommel (8A) umfasst, wobei die Trommel (8A) auf ihrem äußeren Umfang mindestens eine Bahn (8B1, 8B2) zur Führung eines Kopfes (11) des Seilzuges (4) umfasst, wobei sich der Kopf (11) des Seilzuges (4) beim Folgen des Profils der Bahn (8B1, 8B2), das durch Drehen des Griffes (2) erhalten wird, entlang einer im Wesentlichen parallel zur Drehachse des Griffes (2) verlaufenden Achse verschiebt, wobei diese Bewegung in Abhängigkeit von ihrer Richtung ein Loslassen oder Anziehen des hinteren Seilzuges (4) hervorruft.

7. Gangschaltung (1) nach Anspruch 6, **dadurch gekennzeichnet, dass** der Kopf (11) des Seilzuges (4) zwei Nocken (12) umfasst, die abwechselnd mit einem Segment der aus zwei in axialer Richtung verschobenen Segmenten bestehenden Bahn (8B1, 8B2) der Trommel (8A) zusammenwirken können.

8. Gangschaltung (1) nach einem der Ansprüche 6 und 7, **dadurch gekennzeichnet, dass** der Kopf (11) des Seilzuges (4) mit einer Feder (13) versehen ist, die mindestens einen Teil des Kopfes (11), der dauerhaft an der Bahn (8B1, 8B2) anliegt, zurückstellt.

9. Gangschaltung (1) nach einem der Ansprüche 6 bis 8, **dadurch gekennzeichnet, dass** die Trommel (8A) mit Mitteln zum Feststellen in einer Mehrzahl von vorbestimmten Winkelpositionen, die jeweils einer Position der hinteren Schaltvorrichtung (6) an einem Zahnkranz entsprechen, ausgerüstet ist, wobei diese Feststellmittel zudem eine Axialbewegung der Trommel (8A) in der Richtung eines Anziehens des Seilzuges (4) bei einem Drehantrieb des Seilzuges über den Griff (2) erlaubt, wobei die Trommel (8A) von geeigneten Rückstellmitteln in eine entgegengesetzte Richtung zurückgestellt wird.

10. Gangschaltung (1) nach Anspruch 9, **dadurch gekennzeichnet, dass** die Feststellmittel Kerben (14A) und Zähne (14B) mit einem vorzugsweise stumpf dreieckigen Profil umfassen, die von einer Vorderseite der Trommel (8A) bzw. einem stationären Teil gegenüber dem Gehäuse (18) getragen werden.

11. Gangschaltung (1) nach einem der Ansprüche 1 bis 10, **dadurch gekennzeichnet, dass** die Vorrichtung (7) zur Betätigung des vorderen Seilzuges (3) eine Haspel (7A) umfasst, die mit einer Kehle (7B) zum Aufwickeln des vorderen Seilzuges (3) versehen ist, wobei die Haspel (7A) eine Mehrzahl von vorbestimmten Winkelpositionen aufweist, die jeweils einer Position der vorderen Schaltvorrichtung (5) an einem Kettenblatt entsprechen, wobei die Haspel (7A) durch die Wirkung der der vorderen Schaltvorrichtung (5) zugeordneten Feder in eine beliebige der Winkelpositionen zurückgestellt wird.

12. Gangschaltung (1) nach Anspruch 11, **dadurch gekennzeichnet, dass** die Haspel (7A) in einer beliebigen Winkelposition über Anschläge (15) festgestellt wird, die sich zwischen zwei einander gegenüber liegenden ringförmigen Bahnen (16, 17) mit unterschiedlichem Profil erstrecken, von denen eine (17) an einer Vorderseite der Haspel (7A) und die andere (16) an einem drehfest mit dem Griff (2) verbundenen Teil angeordnet ist, wobei die entlang einer parallel zur Drehachse des Griffes (2) verlaufenden Achse axial beweglichen Anschläge (15) in Abhängigkeit von dem Profil der Bahnen fähig sind, sich in einen Hohlraum des drehfest mit dem Griff verbundenen Teils einzuziehen, um eine freie Drehung der Haspel (7A) zu ermöglichen, oder aus dem Teil herausragend in Position gehalten zu werden, um in einem Hohlraum der Haspel (7A) zu stecken, so dass sie die Drehung der Haspel in einer Richtung verhindern, die der Richtung entspricht, die unter der Wirkung der der vorderen Schaltvorrichtung (5) zugeordneten Feder erhalten wird.
